# EUROPEAN PATENT APPLICATION

(11) **EP 4 657 370 A1**
(43) Date of publication of application: **03.12.2025**
(21) Application number: 25173926.4
(22) Date of filing: 02.05.2025
(51) Int. Cl.: G06T 7/00

(54) **SYSTEMS AND METHODS FOR DETERMINING COMPONENT PREDICTED LIFESPAN**

(30) Priority: 27.05.2024 PL 44868824
(71) Applicant: GE Vernova Technology GmbH, 5400 Baden (CH)
(72) Inventor: ZIÓLKOWSKA, Alicja, 02-256 Warsaw (PL); STOCKI, Rafal, 02-256 Warsaw (PL); LISKIEWICZ, Robert, 02-256 Warsaw (PL); MACHALICA, Dawid Tadeusz, 02-256 Warsaw (PL); CEGIELSKI, Adam, 02-256 Warsaw (PL)
(74) Representative: Openshaw & Co.

(57) **Abstract**

Systems and methods for determining component predicted lifespan are provided. A method includes processing, by a computing system comprising one or more processors, an image of the component to detect a grain structure on the component. The method further includes comparing, by the computing system, the detected grain structure with a stress map of the component. The method further includes determining, by the computing system, based on a localization of the detected grain structure and the stress map, a predicted lifespan of the component.

## Description

### FIELD

The present disclosure relates generally to systems and methods for determining the predicted lifespan of components, such as in some embodiments turbine components.

### BACKGROUND

Throughout various applications, consistent and accurate prediction of component lifespan is generally desired. Such predictions can reduce damage due to component breakage and increase efficiency by allowing improved planning of component removal from service.

One application where such consistent and accurate prediction is desired is in applications wherein components are subjected to numerous extreme conditions (e.g., high temperatures, high pressures, large stress loads, etc.). Over time, an apparatus's individual components may suffer creep, deformation, fatigue cracking, etc. that may reduce the component's usable life. Such concerns might apply, for instance, to some turbomachines, such as gas turbine systems. During operation of a turbomachine, various components (collectively known as turbine components) within the turbomachine and particularly within the turbine section of the turbomachine, such as turbine blades, may be subject to creep due to high temperatures and stresses. For turbine blades, creep may cause portions of or the entire blade to elongate so that the blade tips contact a stationary structure, for example a turbine casing, and potentially cause unwanted vibrations and/or reduced performance during operation. Further, excess creep can cause creep rupture and resulting component breakage, which can result in unplanned outages and damage to other components in the system.

Accordingly, components such as turbine components may be monitored for creep. One approach to monitoring components for creep is to configure strain sensors on the components, and analyze the strain sensors at various intervals to monitor for deformations associated with creep strain. One drawback to such approaches is that apparatus for analyzing the strain sensors must be located in particular positions relative to the strain sensors during each analysis of the strain sensors to prevent any error from being introduced into the deformation analysis due to inconsistencies in such locating. This positioning can be time-consuming and costly, thus resulting in inefficiencies in the deformation monitoring process.

Accordingly, improved systems and methods for predicting component lifespan are desired. For example, systems and methods which can consistently and accurately predict creep, and which can thus allow for predicted lifespan planning based on such predictions, would be advantageous.

### BRIEF DESCRIPTION

Aspects and advantages of the systems and methods in accordance with the present disclosure will be set forth in part in the following description, or may be obvious from the description, or may be learned through practice of the technology.

In accordance with one embodiment, a method for determining component predicted lifespan is provided. The method includes processing, by a computing system comprising one or more processors, an image of the component to detect a grain structure on the component. The method further includes comparing, by the computing system, the detected grain structure with a stress map of the component. The method further includes determining, by the computing system, based on a localization of the detected grain structure and the stress map, a predicted lifespan of the component.

In accordance with another embodiment, a computing system for determining component predicted lifespan is provided. The system includes one or more processors, and one or more non-transitory computer-readable media that collectively store instructions that, when executed by the one or more processors, cause the computing system to perform operations. The operations include processing an image of the component to detect a grain structure on the component, comparing the detected grain structure with a stress map of the component, and determining, based on a localization of the detected grain structure and the stress map, a predicted lifespan of the component.

These and other features, aspects and advantages of the present systems and methods will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present systems and methods, including the best mode of making and using the present systems and methods, directed to one of ordinary skill in the art, is set forth in the specification, which makes reference to the appended figures, in which:
FIG. 1 is a schematic illustration of a system obtaining images of a component in accordance with embodiments of the present disclosure;
FIG. 2 illustrates a video of a component in accordance with embodiments of the present disclosure;
FIG. 3 illustrates a plurality of images of a component in accordance with embodiments of the present disclosure;
FIG. 4 illustrates processing of an image of a component by cropping the image in accordance with embodiments of the present disclosure;
FIG. 5 illustrates processing of an image of a component by pixel analysis of the image in accordance with embodiments of the present disclosure;
FIG. 6 illustrates a schematic representation of detected grain structures on a component in accordance with embodiments of the present disclosure;
FIGS. 7(A), 7(B), 7(C), and 7(D) illustrate comparisons between detected grain structures and stress maps of a component in accordance with embodiments of the present disclosure;
FIG. 8 illustrates a computing system in accordance with embodiments of the present disclosure in accordance with embodiments of the present disclosure; and
FIG. 9 is a flow chart illustrating a method for determining component predicted lifespan in accordance with embodiments of the present disclosure.

### DETAILED DESCRIPTION

Reference now will be made in detail to embodiments of the present systems and methods, one or more examples of which are illustrated in the drawings. Each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

The term "fluid" may be a gas or a liquid. The term "fluid communication" means that a fluid is capable of making the connection between the areas specified.

As used herein, the terms "upstream" (or "forward") and "downstream" (or "aft") refer to the relative direction with respect to fluid flow in a fluid pathway. For example, "upstream" refers to the direction from which the fluid flows, and "downstream" refers to the direction to which the fluid flows. However, the terms "upstream" and "downstream" as used herein may also refer to a flow of electricity. The term "radially" refers to the relative direction that is substantially perpendicular to an axial centerline of a particular component, the term "axially" refers to the relative direction that is substantially parallel and/or coaxially aligned to an axial centerline of a particular component and the term "circumferentially" refers to the relative direction that extends around the axial centerline of a particular component.

Terms of approximation, such as "about," "approximately," "generally," and "substantially," are not to be limited to the precise value specified. In at least some instances, the approximating language may correspond to the precision of an instrument for measuring the value, or the precision of the methods or machines for constructing or manufacturing the components and/or systems. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. When used in the context of an angle or direction, such terms include within ten degrees greater or less than the stated angle or direction. For example, "generally vertical" includes directions within ten degrees of vertical in any direction, e.g., clockwise or counter-clockwise.

The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

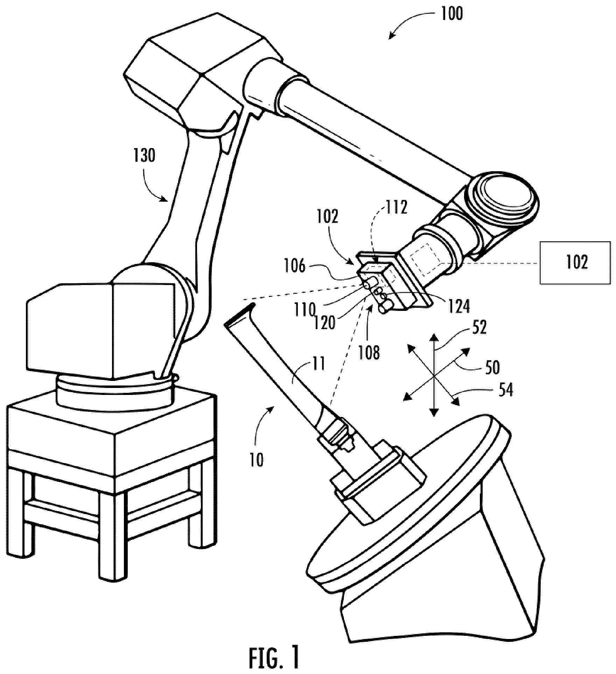

Referring now to FIG. 1, a component 10 is provided. The component 10 (and more specifically the substrate of the overall component 10) can comprise a variety of types of components used in a variety of different applications, such as, for example, components utilized in high temperature applications (e.g., components comprising nickel or cobalt based superalloys, austenitic steels, etc.). In some embodiments, the component 10 may comprise an industrial gas turbine or steam turbine component such as a combustion component or hot gas path component. In some embodiments, the component 10 may comprise a turbine blade, compressor blade, vane, nozzle, shroud, rotor, transition piece or casing. In other embodiments, the component 10 may comprise any other component of a turbine such as any other component for a gas turbine, steam turbine or the like. In some embodiments, the component may comprise a non-turbine component including, but not limited to, automotive components (e.g., cars, trucks, etc.), aerospace components (e.g., airplanes, helicopters, space shuttles, aluminum parts, etc.), locomotive or rail components (e.g., trains, train tracks, etc.), structural, infrastructure or civil engineering components (e.g., bridges, buildings, construction equipment, etc.), and/or power plant or chemical processing components (e.g., pipes used in high temperature applications).

In exemplary embodiments, the component 10 is an equiaxed or directionally solidified component. For example, the component 10 may be a cast component and, after casting, the melt in the mold may advantageously be equiaxed or directionally solidified.

A coordinate system is additionally illustrated in FIG. 1. The coordinate system includes an X-axis 50, a Y-axis 52, and a Z-axis 54, all of which are mutually orthogonal to each other and defined with reference to the component 10.

FIG. 1 further illustrates a computing system 100, which may include for example a data acquisition system 102 and a user computing system 104. The data acquisition system 102 generally acquires data regarding the component 10, and the computing system 104 generally analyzes the data and performs various calculations and other functions as discussed herein. In particular, computing systems 100 in accordance with the present disclosure provide accurate and efficient prediction of component 10 lifespan, as discussed herein.

It should be noted that the various subsystems in computing system 100, such as the data acquisition system 102, user computing system 104, and other suitable subsystems, may be linked together as discussed herein or may be separate, discrete systems.

In accordance with one embodiment, data acquisition system 102 may include an imaging device 106 for obtaining one or more images of the component 10. Such images may be in the form of discrete images (e.g. photographs) or a video which includes a plurality of video frame images extracted from the video. For example, imaging device 106 may include a lens assembly 110 and an image capture device 112. Lens assembly 110 may generally magnify images viewed by the lens assembly 110 for processing by the image capture device 112. Lens assembly 110 in some embodiments may, for example, be a suitable camera lens, telescope lens, etc., and may include one or more lens spaced apart to provide the required magnification. Image capture device 112 may generally be in communication with the lens assembly 110 for receiving and processing light from the lens assembly 110 to generate images. In exemplary embodiments, for example, image capture device 112 may be a camera sensor which receives and processes light from a camera lens to generate images, such as digital images, as is generally understood. Image capture device 112 (and device 106 generally) may, in some embodiments, further be in communication with er computing system 104, via for example a suitable wired or wireless connection, for storing and analyzing the images from the image capture device 112 and device 106 generally. In some embodiments, user computing system 104 may operate imaging device 106 to perform various disclosed steps. In other embodiments, imaging device 106 may be a standalone device operated separately by a user, and may be linked to user computing system 104 or may be a separate, discrete system.

Additionally or alternatively, data acquisition system 102 may additionally include a three-dimensional data acquisition device 108 for examining exterior surface 11 of the component 10. Devices 108 in accordance with the present disclosure generally utilize surface metrology techniques to obtain direct measurements of the component 10 along three axes. In particular, non-contact surface metrology techniques may be utilized in exemplary embodiments. In general, any suitable three-dimensional data acquisition device 108 which utilizes surface metrology techniques to obtain direct measurements in three dimensions may be utilized. In exemplary embodiments, device 108 is a non-contact device which utilizes non-contact surface metrology techniques.

In accordance with one embodiment, device 108 in some exemplary embodiments is a laser scanner which generates a laser scan image. Laser scanners generally include lasers 120 which emit light in the form of laser beams towards objects, such as in these embodiments components 10 generally. The light is then detected by a sensor 124 of the device 108. For example, in some embodiments, the light is then reflected off of surfaces which it contacts, and received by a sensor 124 of the device 108. The round-trip time for the light to reach the sensor 124 is utilized to determine measurements along the various axes. These devices are typically known as time-of-flight devices. In other embodiments, the sensor 124 detects the light on the surface which it contacts, and determines measurements based on the relative location of the light in the field-of-view of the sensor 124. These devices are typically known as triangulation devices. X-axis, Y-axis and Z-axis data points are then calculated based on the detected light, as mentioned.

In some embodiments, the light emitted by a laser 120 is emitted in a band which is only wide enough to reflect off a portion of object to be measured. In these embodiments, robotic arm (as discussed herein) or other suitable mechanism for moving the laser 120 may be utilized to move the laser 120 and the emitted band as required until light has been reflected from the entire object to be measured.

In other embodiments, other suitable surface metrology devices may be utilized. For example, in some embodiments, device 108 may be an x-ray scanner which provides images in the form of x-rays. In some embodiments, device 108 may be or include a high-resolution crystal orientation system which provides images in the form of Laue diffraction patterns, e.g. Laue orientation images. In some embodiments, device 108 may be a scanning electron microscope which provides images in the form of electron channeling contrast images. In some embodiments, device 108 may be a three-dimensional scanner which provides images in the form of three-dimensional scanned geometries.

In some embodiments, data acquisition system 102 may include a robotic arm 130. The robotic arm 130 may support and facilitate movement of other components of the data acquisition system 102 relative to the component to obtain images of the component. For example, the imaging device 106 and data acquisition device 108 (or components thereof, such as light sources) may be mounted to the robotic arm 130. Movement of the robotic arm 130 may, in exemplary embodiments, position the data acquisition system 102 or components thereof (such as light sources) relative to the component 10. In some embodiments, other components, such as imaging device 106, may remain stationary while components such as lighting sources are movable. In exemplary embodiments, the robotic arm 130 is a six-degree-of-freedom arm 130 which provides movement along and about axes 50, 52, 54.

In some embodiments, user computing system 104 may operate data acquisition system 102 to perform various disclosed steps. In other embodiments, data acquisition system 102 may be a standalone device operated separately by a user, and may be linked to user computing system 104 or may be a separate, discrete system. For example, in some embodiments, a user may manually obtain images and upload the images to the user computing system 104.

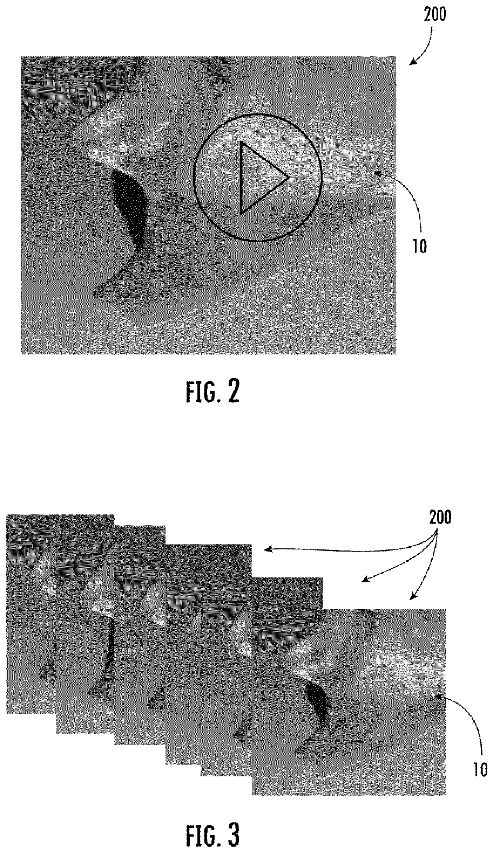

FIG. 2 illustrates an exemplary embodiment of a plurality of images 200, in this embodiment in the form of a video which includes a plurality of video frames.

FIG. 3 illustrates a plurality of images 200, which may be the plurality of video frames from FIG. 2, a plurality of photographs, or a plurality of images obtained from another suitable embodiment of data acquisition system 102 as discussed above. It should be noted that such images may be provided by data acquisition system 102 and computing system 100 generally, or independently from data acquisition system 102 and computing system 100 generally.

A computing system 100, such as the data acquisition system 102 and/or the user computing system 104 thereof, may be capable of processing one or more images 200 of a component 10. Such processing may detect one or more grain structures on the component 10.

A grain structure in accordance with the present disclosure may be or include one or more of a grain, a grain boundary, a size (e.g. length, etc.) of a grain or grain boundary, a shape coefficient of a grain, an aggregate grain size such as minimum, maximum, median, etc., a grain or grain boundary orientation, and/or a grain boundary triple point.

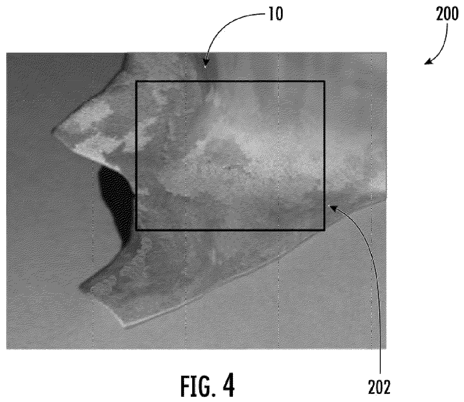

For example, in some embodiments, such processing may include cropping the one or more images 200. Cropping allows for focusing on a specific area of interest on the component 10, such as a portion of the component that is particularly susceptible to high temperatures. FIG. 4 illustrates an image 200 along with a cropped portion 202 thereof.

Additionally or alternatively, in some embodiments, such processing may include performing a pixel analysis of the image 200. This analysis is generally an analysis which differentiates a reference object (for example, grain structures) from a background (for example, the component surface and background) on the basis of differences in color depth (i.e. differences in color or in greyscale). The analysis may be performed on each individual pixel or groups of pixels defining the image 200. For a pixel analysis to occur, the number of bits-per-pixel of the image i.e. 128, 256, etc., may for example be divided into two or more groups (for example a group which includes the lighter color depths and a group which includes the darker color depths). Each group is categorized as a reference object portion or a background portion. For example, the color depth analysis may categorize pixels or multi-pixel groups that are darker or lighter color depths as denoting a reference object (i.e. a surface feature relative to the component, or the component relative to a background), and may categorize pixels or multi-pixel groups that are the other of darker or lighter color depths as denoting a background (i.e. the component relative to a surface feature, or a background relative to the component). Notably, different divisions in the lighter and darker groups may be utilized to distinguish surface features from the component, and the component from a background.

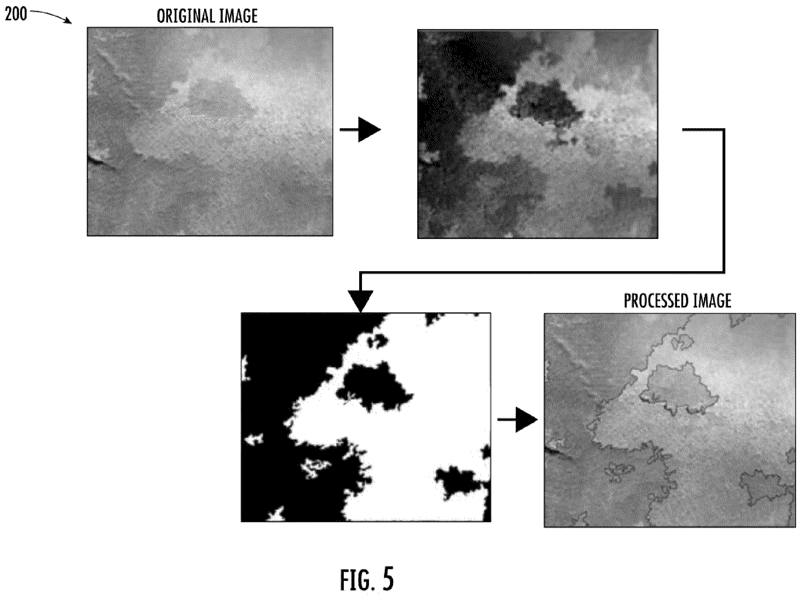

FIG. 5 illustrates one embodiment of a pixel analysis, in which the image contrast is gradually improved via pixel analysis such that grain structures are detected.

In some embodiments, computer vision is utilized to perform the cropping and/or pixel analysis of the image. Examples of suitable computer vision software for such analyses includes, for example, the OpenCV Python library.

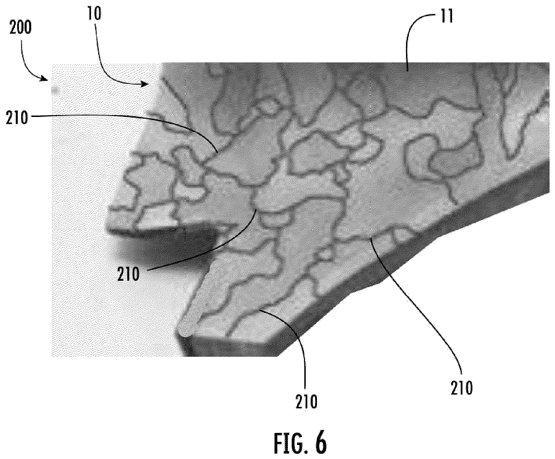

FIG. 6 illustrates a plurality of detected grain structures 210 on a component 10. Notably, the detected grain structures may, in exemplary embodiments, be detected with reference to axes 50, 52, 54. Understanding the localization (e.g. orientation, position, and/or shape) of the detected grain structures is critical to creep and lifespan predictions in accordance with the present disclosure.

A computing system 100, such as the data acquisition system 102 and/or the user computing system 104 thereof, may further be capable of comparing the detected grain structures 210 with a stress map 220 of the component 10. This advantageously facilitates correlation of structure details with directional stresses in specific areas. The stress map 220 may include a map of stress directions, such as for example a contour map of various stress tensor components, in one or more directions, such as along the axes 50, 52, and/or 54 as well as along directions at various angles to the axes 50, 52, and/or 54. The stress map 220 may, for example, be generated via a finite element analysis ("FEA") of the component 10, which may for example be performed by the computing system 100 or performed separately (such as via a separate computing system) and provided to the computing system. Examples of suitable FEA software for such analyses include, for example, ANSYS, Simulia, Nastran, etc.

Comparing of the detected grain structures 210 with the stress map 220 may allow for determination of where grain structures and areas of increased stress or stress directions occur. Further, such comparison may allow for comparison between the localizations (e.g. relative to axes 50, 52, 54) of such grain structures and directions of increased stress or stress directions.

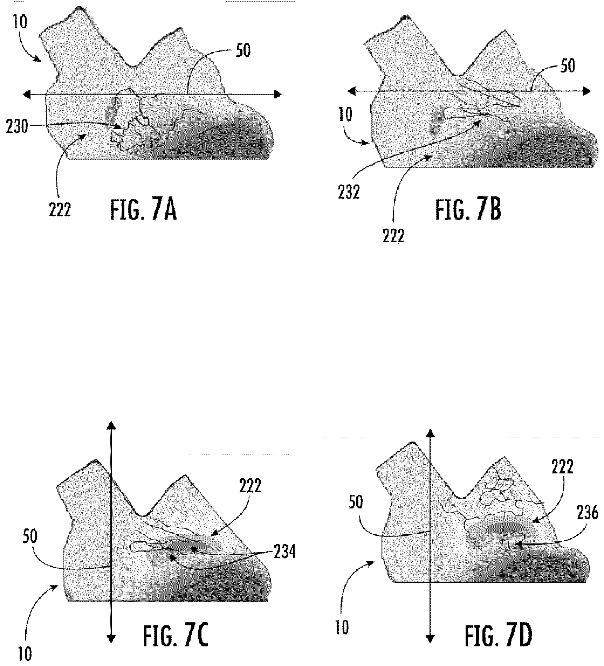

For example, and with reference to FIGS. 7(A), 7(B), 7(C), and 7(D) , in some embodiments, the comparing step may include overlaying the stress map 220 onto the processed image 200 to compare localizations of the detected grain structures 210 with stress directions 222 (e.g. directional orientations of stress concentrations) of the stress map 220. The overlay may occur with reference to the axes 50, 52, 54 so that the axes in the processed image 200 and the stress map 220 match.

Such comparison may include, for example, a detection of grain structures 210 that are within a stress direction 222 t, and a determination of a localization of those detected grain structures 210 relative to the certain stress direction 222. For example, FIGS. 7(A) and 7(B) illustrate an overlay of a stress map 220 onto a processed image 200 to compare localizations of the detected grain structures 210 with stress directions 222 along the X-axis 50. As shown in FIG. 7(A), arrow 230 indicates an exemplary grain structure 210 that is within a stress direction 222 and generally perpendicular to the stress direction 222. As shown in FIG. 7(B), arrow 232 indicates an exemplary grain structure 210 that is within a stress direction 222 and generally parallel to the direction of the stress direction 222. FIGS. 7(C) and 7(D) illustrate an overlay of a stress map 220 onto a processed image 200 to compare localizations of the detected grain structures 210 with stress directions 222 along the Y-axis 52. As shown in FIG. 7(C), arrow 234 indicates an exemplary grain structure 210 that is within a stress direction 222 and generally perpendicular to the stress direction 222. As shown in FIG. 7(D), arrow 236 indicates an exemplary grain structure 210 that is within a stress direction 222 and generally parallel to the he stress direction 222.

A computing system 100, such as the data acquisition system 102 and/or the user computing system 104 thereof, may further be capable of determining a predicted lifespan of the component 10, such as based on the creep behavior of the material. The predicted lifespan of the component 10 may be based on a localization of one or more detected grain structures 210 and the stress map 220 of the component 10. For example, such determination may be based on the detection of grain structures 210 that are within a stress direction 222 t, and the determination of a localization of those detected grain structures 210 relative to the certain e.g. stress direction 222.

In exemplary embodiments, the determining step includes determining a creep probability based on the localization of one or more detected grain structures 210 and a stress direction 222 of the stress map 220, and determining a predicted lifespan of the component 10 based on the creep probability. For example, the detection of grain structures 210 that are within a stress direction 222, and the determination of a localization of those detected grain structures 210 relative to the certain direction of the stress direction 222, may be utilized to determine a creep probability of the component 10. One or more creep probabilities may be generated based on such detections and determinations. The creep probabilities may then be utilized to adjust the predicted lifespan of the component 10, such as relative to a baseline predicted lifespan.

For example, as discussed, FIG. 7(A), illustrates an exemplary grain structure 210 that is within a stress direction 222 and generally perpendicular to the stress direction 222. FIG. 7(C) also illustrates an exemplary grain structure 210 that is within a stress direction 222 and generally perpendicular to the stress direction 222. Such generally perpendicular grain structures 210 will increase the probability of creep, and thus lower the predicted lifespan of the component 10. FIG. 7(B) illustrates an exemplary grain structure 210 that is within a stress direction 222 and generally parallel to the the stress direction 222. FIG. 7(D) also illustrates an exemplary grain structure 210 that is within a stress direction 222 and generally parallel to the stress direction 222. Such generally parallel grain structures 210 will decrease, not increase, or increase relatively less than, e.g., perpendicular, the probability of creep, and thus may raise or not lower the predicted lifespan of the component 10.

It should be understood that the present disclosure is not limited to comparisons with stress directions only along axes 50, 52, and/or 54, or to predicted lifespan determinations only based on generally parallel or generally perpendicular grain structures. Rather, such comparisons and determinations are exemplary embodiments, and the present disclosure encompasses stress directions in any suitable directions and predicted lifespan determinations based on grain structures having any suitable localizations relative to the stress directions. The present inventors have discovered the ability to detect macrostructure on real three-dimensional components using non-destructive characterization technique; and the ability to link extracted grain structures with stress maps to execute automatic computer based reasoning on the creep life of the specific component. The present disclosure advantageously facilitates more accurate and consistent lifespan prediction and creep probability determinations on this basis.

In some embodiments, additional variables may be utilized to determine the predicted lifespan of the component 10. For example, such additional variables may be utilized to determine the creep probability. Examples of such variables may include, for example, material type of the component, , a use time of the component 10, and/or a use temperature of the component 10.

The value or magnitude of a grain structure or of one or more of such additional variables may be utilized to adjust the predicted lifespan. For example, a relatively large grain boundary (relative to, for example, a predetermined threshold value for a component 10), may increase the predicted lifespan, whereas a relatively small grain structure (relative to, for example the threshold value), may decrease the predicted lifespan. Similarly, a relatively short use time or low use temperature (relative to, for example, a predetermined threshold value for a component 10), may increase the predicted lifespan, whereas a relatively long use time or high use temperature (relative to, for example the threshold value), may decrease the predicted lifespan. Such increases and/or decreases may be made relative to a baseline predicted lifespan for the component, which may be predetermined or determined using computing system 100.

The value or magnitude of such additional variables, as well as threshold values, may be determined by the computing system 100, or may be determined independently and provided to the computing system 100 for use in the determining step.

The determined predicted lifespan may advantageously be output from the computing system 100, such that a user of the computing system receives the determined predicted lifespan. The predicted lifespan determination may advantageously provide a relatively accurate lifespan estimate, thus allowing the user to extend the actual use life of the component 10 as allowed per the determined predicted lifespan with a reduced concern of breakage risk. The predicted lifespan determination may further advantageously allow the user to reduce the actual use life of the component 10 and remove the component 10 from service prior to breakage risk, etc. per the determined predicted lifespan, thus reducing unplanned outage issues.

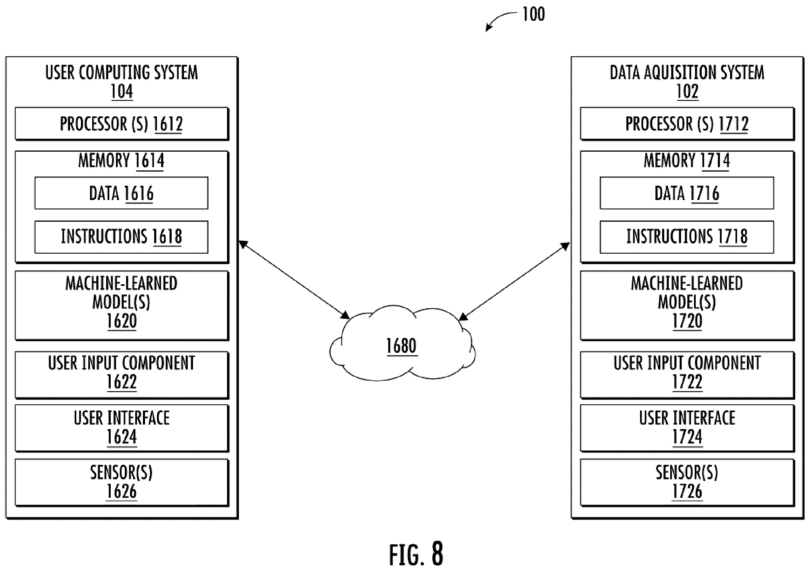

FIG. 8 depicts a block diagram of an example computing system 100 that performs one or more of the various functions and steps described herein in accordance with embodiments of the present disclosure. The computing system 100 can include a plurality of computing systems that communicate over a network 1680. The computing system 100 can include one or more user computing systems 104, and one or more data acquisition systems 102.

The user computing system 104 can include one or more computing devices. The computing devices can include a mobile computing device (e.g., a smartphone or tablet), a laptop computing device, a desktop computing device, a wearable computing device (e.g., a smart watch, a smart jacket, smart glasses, smart backpacks, etc.), a smart appliance (e.g., a smart thermostat, a smart refrigerator, a smart washing machine, a smart dryer, etc.), an embedded computing device, a surveillance computing device (e.g., a drone), or any other type of computing device.

The user computing system 104 can include one or more processors 1612 that can be utilized to perform one or more operations. The one or more processors 1612 can include any suitable processing device (e.g., a processor core, a microprocessor, an ASIC, a FPGA, a controller, a microcontroller, etc.) and can be one processor or a plurality of processors that are operatively connected. The one or more processors 1612 can perform operations in series and/or in parallel. The one or more processors 1612 may be dedicated to a particular computing device and/or may be utilized by a plurality of devices to perform processing tasks.

The user computing system 104 may include memory 1614 that can store data 1616 and/or instructions 1618. The memory 1614 can include one or more non-transitory computer-readable storage mediums, such as RAM, ROM, EEPROM, EPROM, flash memory devices, magnetic disks, etc., and combinations thereof. The data 1616 can include user data, application data, operating system data, etc. The data 1616 can include text data, image data, audio data, statistical data, latent encoding data, etc. The instructions 1618 can include instructions that when executed by the one or more processors 1612 cause the user computing device 104 to perform operations.

In some implementations, the user computing system 104 can store and utilize one or more machine-learned models 1620. The one or more machine-learned models 1620 can include a computer vision model, which can for example include an object detection model. The one or more machine-learned models 1620 can further include a detection model, a natural language processing model, a segmentation model, a classification model, an augmentation model, a generative model, a discriminative model, and/or one or more other model types. In some implementations, the one or more machine-learned models 1620 can include various machine-learned models such as neural networks (e.g., deep neural networks) or other types of machine-learned models, including non-linear models and/or linear models. Neural networks can include convolutional neural networks, feed-forward neural networks, recurrent neural networks (e.g., long short-term memory recurrent neural networks), or other forms of neural networks. The one or more machine-learned models 1620 may include one or more transformer models.

The user computing system 104 can include one or more user input components 1622, one or more user interfaces 1624, and/or one or more sensors 1626. The one or more user input components 1622 can be configured to receive user inputs and/or environmental inputs. For example, the one or more user input components 1622 can include a touch-sensitive component (e.g., a touch-sensitive display or a touch pad) that is sensitive to the touch of a user input object (e.g., a finger or a stylus). The touch-sensitive component can serve to implement a virtual keyboard. Other example user input components include a computer mouse, a remote, a controller, a microphone, a traditional keyboard, or other means by which a user can provide user input. In some implementations, the one or more user input components 1622 can include one or more gesture processing engines to determine touch gestures, audio gestures, and/or body gestures. The one or more user interfaces 1624 can be configured to obtain and/or display data. The one or more user interfaces 1624 can be associated with an operating system, one or more applications, one or more web platforms, and/or one or more devices. The one or more sensors 1626 can include one or more image sensors, one or more infrared sensors, one or more light detection and ranging (lidar) sensors, one or more audio sensors, one or more touch sensors, one or more sonic navigation and ranging (sonar) sensor, and/or one or more heat sensors.

The user computing system(s) 104 can be communicatively connected with the data acquisition system(s) 102 via the network 1680, which can include the internet (e.g., ethernet and/or WiFi), Bluetooth, and/or direct wiring.

The data acquisition system 102 can include one or more computing devices. The computing devices can include a mobile computing device (e.g., a smartphone or tablet), a laptop computing device, a desktop computing device, a wearable computing device (e.g., a smart watch, a smart jacket, smart glasses, smart backpacks, etc.), a smart appliance (e.g., a smart thermostat, a smart refrigerator, a smart washing machine, a smart dryer, etc.), an embedded computing device, a surveillance computing device (e.g., a drone), or any other type of computing device.

The data acquisition system 102 can include one or more processors 1712 that can be utilized to perform one or more operations. The one or more processors 1712 can include any suitable processing device (e.g., a processor core, a microprocessor, an ASIC, a FPGA, a controller, a microcontroller, etc.) and can be one processor or a plurality of processors that are operatively connected. The one or more processors 1712 can perform operations in series and/or in parallel. The one or more processors 1712 may be dedicated to a particular computing device and/or may be utilized by a plurality of devices to perform processing tasks.

The data acquisition system 102 may include memory 1714 that can store data 1716 and/or instructions 1718. The memory 1714 can include one or more non-transitory computer-readable storage mediums, such as RAM, ROM, EEPROM, EPROM, flash memory devices, magnetic disks, etc., and combinations thereof. The data 1716 can include user data, application data, operating system data, etc. The data 1716 can include text data, image data, audio data, statistical data, latent encoding data, etc. The instructions 1718 can include instructions that when executed by the one or more processors 1712 cause the user computing device 104 to perform operations.

In some implementations, the data acquisition system 102 can store and utilize one or more machine-learned models 1720. The one or more machine-learned models 1720 can include a computer vision model, which can for example include an object detection model. The one or more machine-learned models 1720 can further include a detection model, a natural language processing model, a segmentation model, a classification model, an augmentation model, a generative model, a discriminative model, and/or one or more other model types. In some implementations, the one or more machine-learned models 1720 can include various machine-learned models such as neural networks (e.g., deep neural networks) or other types of machine-learned models, including non-linear models and/or linear models. Neural networks can include convolutional neural networks, feed-forward neural networks, recurrent neural networks (e.g., long short-term memory recurrent neural networks), or other forms of neural networks. The one or more machine-learned models 1620 may include one or more transformer models.

The data acquisition system 102 can include one or more user input components 1722, one or more user interfaces 1724, and/or one or more sensors 1726. The one or more user input components 1722 can be configured to receive user inputs and/or environmental inputs. For example, the one or more user input components 1722 can include a touch-sensitive component (e.g., a touch-sensitive display or a touch pad) that is sensitive to the touch of a user input object (e.g., a finger or a stylus). The touch-sensitive component can serve to implement a virtual keyboard. Other example user input components include a computer mouse, a remote, a controller, a microphone, a traditional keyboard, or other means by which a user can provide user input. In some implementations, the one or more user input components 1722 can include one or more gesture processing engines to determine touch gestures, audio gestures, and/or body gestures. The one or more user interfaces 1724 can be configured to obtain and/or display data. The one or more user interfaces 1724 can be associated with an operating system, one or more applications, one or more web platforms, and/or one or more devices. The one or more sensors 1726 can include one or more image sensors, one or more infrared sensors, one or more light detection and ranging (lidar) sensors, one or more audio sensors, one or more touch sensors, one or more sonic navigation and ranging (sonar) sensor, and/or one or more heat sensors.

The data acquisition system 102 can be communicatively connected with the user computing systems 104 via the network 1680, which can include the internet (e.g., ethernet and/or WiFi), Bluetooth, and/or direct wiring.

The network 1680 can include any type of communications network (e.g., a local area network (e.g., intranet), wide area network (e.g., Internet), or some combination thereof) and can include any number of wired or wireless links. Communication over the network 1680 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

The computing system 100 can be utilized to implement the systems and methods disclosed herein. Other computing systems including other system configurations may be utilized to implement the systems and methods disclosed herein.

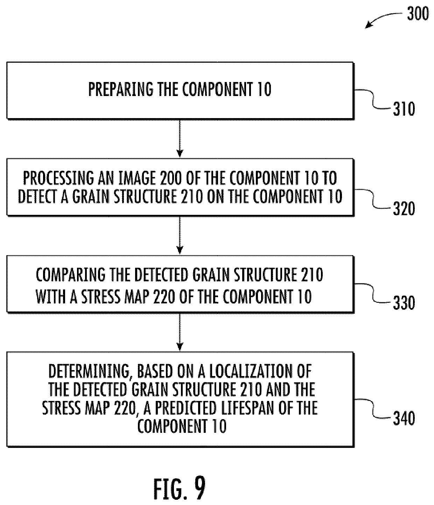

Referring now to FIG. 9, the present disclosure is further directed to methods 300 for determining component 10 predicted lifespan. One or more steps of such methods may be performed by, for example, a computing system 100 as discussed herein.

For example, a method 300 may include, as illustrated at step 310, preparing the component 10, such as for imaging of the component 10. Such preparation may include, for example, surface preparation (e.g. acid etching, electrochemical treatment, or other chemical treatment, or mechanical polishing, etc.) of the component 10 and/or other suitable processes which facilitate improved visibility of grain structures of the component 10 surface.

A method 300 in accordance with the present disclosure may further include, as illustrated at step 320, processing an image 200 of the component 10 to detect one or more grain structures 210 on the component 10, as discussed herein.

A method 300 in accordance with the present disclosure may further include, as illustrated at step 330, comparing the detected grain structure 210 with a stress map 220 of the component 10, as discussed herein. The comparing step may include, for example, overlaying the stress map 220 onto the processed image 200 to compare the localizations of the detected grain structures 210 with stress direction 222 of the stress map 220, as discussed herein.

A method 300 in accordance with the present disclosure may further include, as illustrated at step 340, determining, based on the localizations of the detected grain structures 210 and the stress maps 220, a predicted lifespan of the component 10, as discussed herein. Such determining step may, for example, include determining a creep probability based on the localizations of the detected grain structures 210 and the stress directions 222 of the stress map 220, and determining a predicted lifespan of the component 10 based on the creep probability, as discussed herein.

In exemplary embodiments, the determining step is further based on one of a material type of the component, a use time of the component 10, and/or a use temperature of the component 10, as discussed herein.

Further aspects of the invention are provided by the subject matter of the following clauses:
A method for determining component predicted lifespan, including processing, by a computing system comprising one or more processors, an image of the component to detect a grain structure on the component. The method further includes comparing, by the computing system, the detected grain structure with a stress map of the component. The method further includes determining, by the computing system, based on a localization of the detected grain structure and the stress map, a predicted lifespan of the component.
A computing system for determining component predicted lifespan, including one or more processors, and one or more non-transitory computer-readable media that collectively store instructions that, when executed by the one or more processors, cause the computing system to perform operations. The operations include processing an image of the component to detect a grain structure on the component, comparing the detected grain structure with a stress map of the component, and determining, based on a localization of the detected grain structure and the stress map, a predicted lifespan of the component.
The system or method of any one or more embodiments disclosed herein, further comprising preparing the component, wherein preparing the component comprises surface preparation of the component.
The system or method of any one or more embodiments disclosed herein, wherein the image is a plurality of images.
The system or method of any one or more embodiments disclosed herein, wherein the image is one of a photograph, a video frame, a laser scan image, an x-ray scan image, a Laue orientation image, an electron channeling contrast image, or a three-dimensional scanned geometry.
The system or method of any one or more embodiments disclosed herein, wherein processing the image comprises performing a pixel analysis of the image.
The system or method of any one or more embodiments disclosed herein, wherein computer vision is utilized to perform the pixel analysis of the image.
The system or method of any one or more embodiments disclosed herein, wherein the comparing step comprises overlaying the stress map onto the processed image to compare the localization of the detected grain structure with a stress direction of the stress map.
The system or method of any one or more embodiments disclosed herein, wherein the determining step comprises determining a creep probability based on the localization of the detected grain structure and a stress direction of the stress map, and determining a predicted lifespan of the component based on the creep probability.
The system or method of any one or more embodiments disclosed herein, wherein the determining step is further based on one of a component material, a use time of the components, or a use temperature of the component.
The system or method of any one or more embodiments disclosed herein, wherein the component is a directionally-solidified component.
The system or method of any one or more embodiments disclosed herein, wherein the component is an equiaxed component.
The system or method of any one or more embodiments disclosed herein, wherein the component is a turbine component.
The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.
This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A method for determining component predicted lifespan, the method comprising:
processing, by a computing system comprising one or more processors, an image of the component to detect a grain structure on the component;
comparing, by the computing system, the detected grain structure with a stress map of the component; and
determining, by the computing system, based on a localization of the detected grain structure and the stress map, a predicted lifespan of the component.

2. The method of claim 1, further comprising preparing the component, wherein preparing the component comprises surface preparation of the component.

3. The method of claim 1, wherein the image is a plurality of images.

4. The method of claim 1, wherein the image is one of a photograph, a video frame, a laser scan image, an x-ray scan image, a Laue orientation image, an electron channeling contrast image, or a three-dimensional scanned geometry.

5. The method of claim 1, wherein processing the image comprises performing a pixel analysis of the image.

6. The method of claim 5, wherein computer vision is utilized to perform the pixel analysis of the image.

7. The method of claim 1, wherein the comparing step comprises overlaying the stress map onto the processed image to compare the localization of the detected grain structure with a stress direction of the stress map.

8. The method of claim 1, wherein the determining step comprises determining a creep probability based on the localization of the detected grain structure and a stress direction of the stress map, and determining a predicted lifespan of the component based on the creep probability.

9. The method of claim 1, wherein the determining step is further based on one of a component material, a use time of the components, or a use temperature of the component.

10. The method of claim 1, wherein the component is a directionally-solidified component.

11. The method of claim 1, wherein the component is an equiaxed component.

12. The method of claim 1, wherein the component is a turbine component.

13. A computing system for determining component predicted lifespan, the system comprising:
one or more processors; and
one or more non-transitory computer-readable media that collectively store instructions that, when executed by the one or more processors, cause the computing system to perform operations, the operations comprising:
processing an image of the component to detect a grain structure on the component;
comparing the detected grain structure with a stress map of the component; and
determining, based on a localization of the detected grain structure and the stress map, a predicted lifespan of the component.

14. The system of claim 13, wherein the image is a plurality of images.

15. The system of claim 13, wherein the image is one of a photograph, a video frame, a laser scan image, an x-ray scan image, a Laue orientation image, an electron channeling contrast image, or a three-dimensional scanned geometry.
